# EUROPEAN PATENT APPLICATION

(11) **EP 4 760 135 A1**
(43) Date of publication of application: **17.06.2026**
(21) Application number: 25223304.4
(22) Date of filing: 15.12.2025
(51) Int. Cl.: F16L 25/10, F16L 51/00

(54) **PIPE COUPLER WITH INSERTION INDICATOR**

(30) Priority: 16.12.2024 NL 2039362
(71) Applicant: Wienerberger AG, 1100 Wien (AT)
(72) Inventor: Bannert, Oliver, 1100 Vienna (AT); Wijnker, Christiaan Johannes Nicolaas, 1606 XC Venhuizen (NL); Schouten, Michael Adrianus Jacobus, 1689 WT Zwaag (NL)
(74) Representative: Nederlandsch Octrooibureau

(57) **Abstract**

A coupler (10) comprises a first end (14) for receiving a pipe section and a second end (16); and an insertion indicator (30) located between the first end (14) and the second end (16). The insertion indicator (30) comprises a rigid part (32) at least partially surrounded by flexible material (35), and the rigid part (32) flexes outward upon insertion of a pipe into the coupler (10).

## Description

### FIELD OF THE INVENTION

This relates to couplers, and in particular a coupler for connecting with a pipe end and/or fitting.

### BACKGROUND

Pipes, fittings or/and tubes are commonly used in various fields, including in-house discharge pipes, and underground pipes for drainage systems such as municipal sanitary sewer systems and/or storm sewer systems. To connect pipe sections with a certain tensile strength, there are various conventional techniques including gluing or welding together the pipe sections.

Another method of connection is using a coupler with an opening and a seal on the inside. Such a seal is typically formed of a sealing ring in an interior groove of the coupler. For insertion, a spigot end of the pipe can be lubricated and/or chamfered, and then is inserted into the coupler to form a sealing connection.

To allow for thermal elongation of the piping system, a thermal elongation gap is created manually at the connection of the spigot and coupler, meaning that the spigot needs to be fully pushed in and then be pulled out again a small distance to form the gap. This results in an installation process which takes considerable time, and could result in leakage, for example, if the spigot is pulled out too much.

### SUMMARY OF THE INVENTION

According to a first aspect, a coupler comprises a first end for receiving a pipe section and a second end; and an insertion indicator located between the first end and the second end, the insertion indicator comprising a rigid part at least partially surrounded by flexible material, wherein the rigid part flexes outward upon insertion of a pipe into the coupler. Such a coupler provides a simple, yet reliable method to quickly feel and view from an outside of the coupler whether a pipe has been inserted into the coupler to a desired depth (at least the depth of the insertion indicator). The rigid part of the insertion indicator flexes outward upon insertion of a pipe to indicate that the pipe has been properly inserted to at least that depth, and the flexible material at least partially surrounding the rigid part ensures that the rigid part can properly flex outward while maintaining the liquid seal of the coupler.

According to an embodiment, the rigid part comprises a hinge portion which is configured to allow the flexing outward upon insertion of a pipe. Optionally, the hinge portion comprises a portion of the rigid part in which a width of the rigid material in the radial direction is less than a width (in the radial direction) of the material in the rigid part not part of the hinge portion. In other words, the hinge portion is thinner. The thinner portion forming the hinge portion typically extends along a circumferential direction of the rigid part and typically starts (in the axial direction) where the insertion indicator and flexible material begins (e.g., where the insertion indicator begins in the axial direction). This allows for easy but leak-proof flexing of the rigid part of the insertion indicator through the hinge portion. Additionally, having the hinge portion as a thinner part of the material allows for easy formation, for example, in injection moulding not needing a lot of additional parts and/or materials for forming the hinge. In some embodiments, the hinge portion could instead of or in addition to the thinner width of material, be formed of a different material, for example, a more flexible material to allow hinging. Thus, the material, not the thickness could allow for the hinging and the thickness could be the same as the wall thickness.

According to an embodiment, the rigid part comprises a protrusion extending into an interior of the coupler and which is pushed outward upon insertion of a pipe, thereby flexing the rigid part outward. Optionally, the protrusion is rounded or spherical. The protrusion can extend inward from the general inner circumference of the coupler, for example 0,1 - 10 mm. This can help to ensure that the rigid part is pushed outward by the insertion of a pipe thereby flexing the insertion indicator outwards to visually show that a pipe is inserted into the coupler at least to the depth of the insertion indicator. Shaping the protrusion round or spherical can help to ensure that a pipe pushes or flexes the insertion indicator outward and does not get caught or stuck on it. Different embodiments could have different shapes, for example, slanted, trapezoidal or triangular protrusions so long as they are configured to be pushed or flexed outward by a pipe upon insertion to or beyond the depth of the insertion indicator.

According to an embodiment, the rigid part is surrounded on one or more sides (e.g., 1-4) by flexible material. Surrounding the rigid part with flexible material on one or more sides can allow for easy flexing of the rigid part to indicate insertion of the pipe while also ensuring that such flexing does not result in leakage of the coupler around the insertion indicator.

According to an embodiment, when no pipe is inserted into the coupler, the insertion indicator substantially aligns with an outer circumference of the coupler. By aligning with the outer circumference of the coupler when not flexed, the insertion indicator maintains a compact and aesthetically pleasing coupler while not in use. This also results in an easy way to quickly see that a pipe has not been inserted to the depth of the insertion indicator in the coupler, or has been upon the flexing to be at least partially outside the general outer circumference of the coupler. Thus, the insertion could be both seen visually and felt tactilely. **In** other embodiments, at least part of the insertion indicator is at least partially offset radially inward from the outer circumference of the coupler. This could mean that the insertion indicator outer surface is generally parallel with the outer surface of the coupler and/or that it is at an angle or at least partially at an angle. In such an embodiment, the flexing outward (upon insertion of a pipe/spigot) could be to such a point where the insertion indicator or part of the insertion indicator substantially aligns with the outer circumference.

According to an embodiment, the coupler comprises a plurality of insertion indicators located between the first end and the second end, each insertion indicator comprising a rigid part at least partially surrounded by a flexible part, wherein each rigid part flexes outward upon insertion of a pipe into the coupler. Optionally, the insertion indicators are spaced around the circumference of the coupler. Further optionally, the plurality of insertion indicators is 2-4 insertion indicators. Having a plurality of insertion indicators spaced around the coupler ensures that a pipe makes contact with the insertion indicators (to flex them outward) to easily and quickly see and feel that the pipe has been inserted at least to the depth of the indicator. This can also help to ensure that the insertion indicator would have no negative effect on the aligning of the pipe/socket when inserted.

According to an embodiment, the rigid part comprises a plastic or metal. This can be the same general material as which forms the coupler body, or could be a different material in some embodiments. Plastic or metal can provide a solid indicator which is able to flex but also maintain a strong coupler body and can be easily flexed by the pipe and seen or felt by a user looking to view insertion depth of the pipe into the coupler.

According to an embodiment, the flexible material is thermoplastic elastomer and/or rubber. Such material can provide a flexible and leak-tight connection between the coupler body and rigid part of the insertion indicator.

According to an embodiment, the coupler further comprises a stop edge located at an inner circumference of the coupler between the insertion indicator and the second end. Optionally, the stop edge comprises a rigid portion and a flexible portion comprising a plurality of flexible protrusions and/or a wave for receiving an end of a pipe section. Such flexible protrusions and/or wave can extend axially to form a receiving surface for an end of a pipe in the coupler. Providing such a stop edge allows for thermal expansion in the system and easy and quick installation of a pipe into a coupler, simply pushing the end to the stop edge (where it stops), and being able to visually see and feel that the pipe has been inserted properly with the insertion indicators being flexed outward. **In** the case that the pipe would inadvertently be stopped on something else in the coupler, the insertion indicator(s) would not flex outward and the user could know that the pipe is not yet fully inserted and needs to be adjusted.

According to an embodiment, the force to flex the rigid part outward is configured such that it does not increase the insertion force needed to insert a pipe into the coupler. Thus, the flexibility (e.g., through the hinge portion, flexible portion, configuration of the rigid part, material, etc.) is such that a user inserting the pipe should not need to provide additional insertion force to move past the insertion indicator(s). This helps to ensure that the pipe does not get accidentally stopped or caught on the insertion indicator(s) during insertion, and is instead inserted to the desired depth (e.g., until an end connects with a stop edge).

According to a further aspect, tan assembly comprises the coupler as previously described with a pipe with a first end extending inside the coupler such that the insertion indicator is flexed outward. Thus, the coupler provides a visual and tactile indication through the insertion indicator that the pipe is properly inserted, thereby saving time and helping to avoid mistakes when inserting a pipe into the coupler.

According to a further aspect, a method of forming a coupler with an insertion indicator comprises injection moulding a rigid coupler portion with a first end for receiving a pipe section, a second end and a rigid part of an insertion indicator; and moulding flexible material to at least partially surround the rigid part of the insertion indicator, wherein the rigid part is configured such that the rigid part flexes outward upon insertion of a pipe into the coupler.

According to an embodiment, the step of injection moulding the rigid part of an insertion indicator comprises forming the insertion indicator to have a hinge portion, and a protrusion extending into an interior of the coupler. Forming such a hinge portion and protrusion can provide a simple but reliable way to ensure the insertion indicator flexes outward upon insertion of a pipe to the depth of the insertion indicator in the coupler.

### BRIEF DESCRIPTION OF THE DRAWINGS

The invention will be described further with respect to embodiments shown in the drawings.
FIG. 1A shows a perspective top view of a coupler;
FIG. 1B shows a cross-sectional view of the coupler of FIG. 1A;
FIG. 1C shows a close up view of the insertion indicator of the coupler of FIG. 1A;
FIG. 2A shows a cross-sectional view of a pipe being inserted into a coupler;
FIG. 2B shows a cross-sectional view of the pipe fully connected to the coupler;
FIG. 3 shows a close up cross-sectional view of a further embodiment of an insertion indicator.

### DESCRIPTION

The following is a description of certain embodiments of the invention, given by way of example only and with reference to the figures. It is also to be understood that the terminology used herein is for the purpose of describing particular aspects only and is not intended to be limiting.

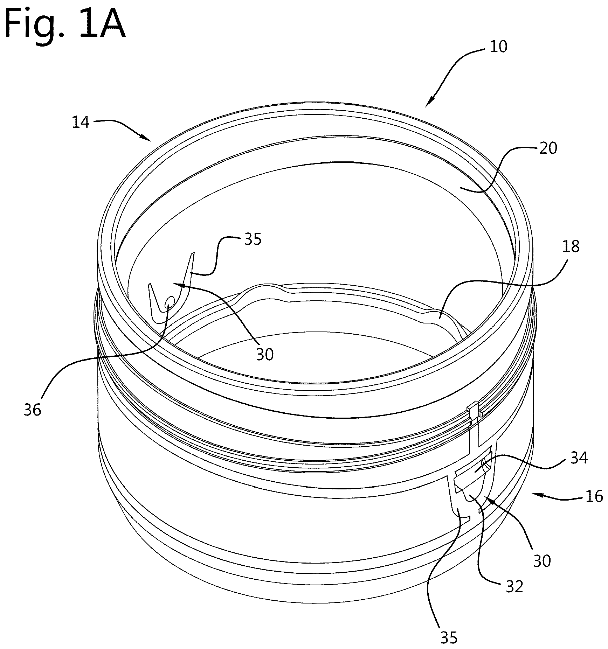

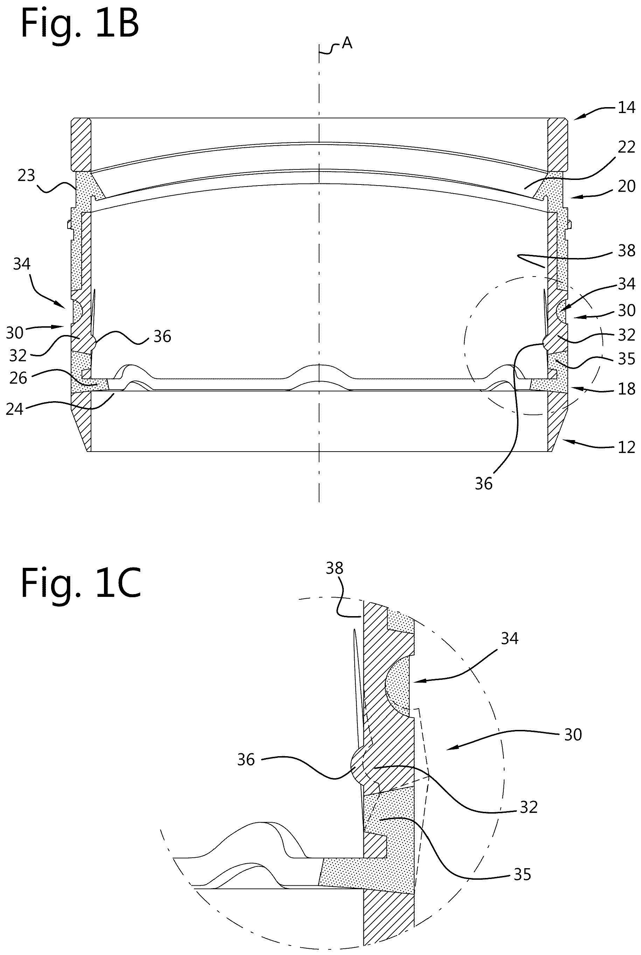

FIG. 1A shows a perspective top view of coupler 10; FIG. 1B shows a cross-sectional view of coupler 10; and FIG. 1C shows a close-up view of insertion indicator 30 of coupler 10.

Coupler 10 includes first end 14, second end 16, stop edge 18, sealing system 20 and one or more insertion indicators 30 (two shown in the embodiment of Figs. 1A-1C though only one could be used). Coupler 10 is generally cylindrical or oval shaped and defines a pipe section insertion direction along a central axis A to receive a pipe section through first end 14. In other embodiments (e.g., where the pipe is a different shape), coupler 10 could have another general shape (e.g., square or triangular).

Sealing system 20 is generally located between first end 14 of coupler and stop edge 18, and is typically located closer to (but at a distance from) the first end 14 than stop edge 18, though can vary depending on coupler requirements. Sealing system 20 is formed of a flexible material, for example, TPE, TPV, TPO or rubber, which typically extends from an inside to an outside of coupler 10 at the location of sealing system 20. As can be seen in Fig. 1B, outer surface 23 of sealing system 20 is also offset, or set radially inward from the outer surface of the rest of coupler 10 (the generally rigid parts). This can be, for example, 0,1 to 10 mm, preferably 0,2 to 5 mm though can vary depending on the size of the coupler, materials used, etc.

Sealing system 20 comprises sealing lip 22 extending around the circumference of coupler 10, in this case the inner circumference (though could be the outer circumference in some embodiments), and can extend at an angle A (e.g., 15-75 degrees) toward second end 16. Sealing lip 22 and sealing system 20 can extend in a wave shape around the inner circumference of coupler 10, meaning that the location of the sealing lip 22 varies along the insertion direction with respect to the first end 14 (or a plane of insertion perpendicular to axis A if first end 14 is not in a plane) over at least part of the sealing lip 22. These are examples only, and sealing lip and location could vary in other embodiments. In some embodiments, coupler 10 could include two or more sealing systems 20, located at varying distances along axis A between first end 14 and stop edge 18. Each could include a sealing lip and a wavy or straight shape.

If wavy, the wave shape can be repetitive, sinusoidal, sawtooth, square or any other suitable shape, with a wave length (the length of the wave before it repeats) equal to 1-1/10 of the circumference (meaning the wave would repeat 0 to 10 times), preferably 1-1/5 of the circumference, more preferably 1-1/3 or 1-1/2 of the circumference. Other embodiments could have a more repetitive wave. Sealing system 20 and/or sealing lip 22 can in some embodiments be rotationally symmetric, for example, being 90 or 180 degrees rotationally symmetric.

Stop edge 18 includes lip 24 extending radially inward around the inner circumference of coupler 10 between second end 16 and sealing system 20. Lip 24 is generally rigid and annular, and formed of the same generally rigid material as the inner circumference of coupler 10 (outside of sealing system 20), for example a plastic material such as polypropylene ("PP") or a metal. On a top side of rigid lip 24 is layer 26, formed of flexible material (e.g., TPE), generally the same material as sealing system 20. Layer 26 is connected, for example, bonded or moulded to lip 24 on a lower surface in the embodiment shown, though other embodiments could not have lip 24 supporting layer 26. The upper surface of layer 26 is where the wave or protrusions are located.

Coupler 10 includes two insertion indicators 30, though other embodiments could include fewer or more, for example, 1-5 insertion indicators. If more than one insertion indicator 30 is present, insertion indicators 30 can be spaced around the circumference of coupler between first end 14 and stop edge 18. Typically all insertion indicators 30 would be located at the same position along axis A, though could vary in some embodiments.

Each insertion indicator 30 includes rigid part 32 at least partially surrounded by flexible material. Rigid part 32 can include hinge portion 34, which can be formed by the rigid material being thinner in the radial direction, thereby allowing (in combination with flexible material 35) the rest of rigid part 32 to flex outward. Rigid part 32 is shown as U or V shaped (though could vary in other embodiments) and extends from the rigid material forming coupler 10 (outside of sealing system and stop edge), though can vary in shape in different embodiments. At least partially surrounding rigid part 32 is flexible material, in this case surrounding rigid part 32 on three sides (as seen from the inside), with the fourth side of rigid part connecting to general coupler body through hinge 34. Each insertion indicator also includes protrusion 36, which in the relaxed (unflexed) state is located radially inward from the inner wall 38 of coupler. This can be, for example, 0,1 - 10 mm inward, resulting in a smaller inner diameter of coupler at the location of protrusion(s) 36. Protrusion(s) 36 can be rounded or spherical in shape, or can be other shapes (e.g., slanted).

As seen in Fig. 1B, with the exception of sealing system 20 and layer 26, the inner surface of coupler 10 is formed of rigid material (e.g., PP). Some outer portions can have flexible material over the rigid portion, but this is typically for aesthetic and/or manufacturing purposes, and the rigid material forming most of the length of coupler 10 gives coupler 10 strength and stability for insertion, coupling and sealing.

Coupler 10 is typically formed of a two-step injection moulding process, with a first moulding step to form the substantially rigid (e.g., PP) parts of coupler 10. The second step is to mould the flexible parts, sealing system 20, layer 26, flexible portions 35 of insertion indicators 30, and any outer layers. Alternatively, the flexible portions could be first moulded and then the rigid portions. In another embodiment, the process could be three steps, for example, the substantially rigid parts from the sealing system to the second end 12, then the flexible portions, followed by the substantially rigid portion on the first end 14. Thus, coupler 10 is formed integrally as one part, making coupler 10 strong, stable and leak-proof despite the use of different materials and no direct reinforcement of sealing system 20 or flexible portions 35 of insertion indicators 30 with more rigid material.

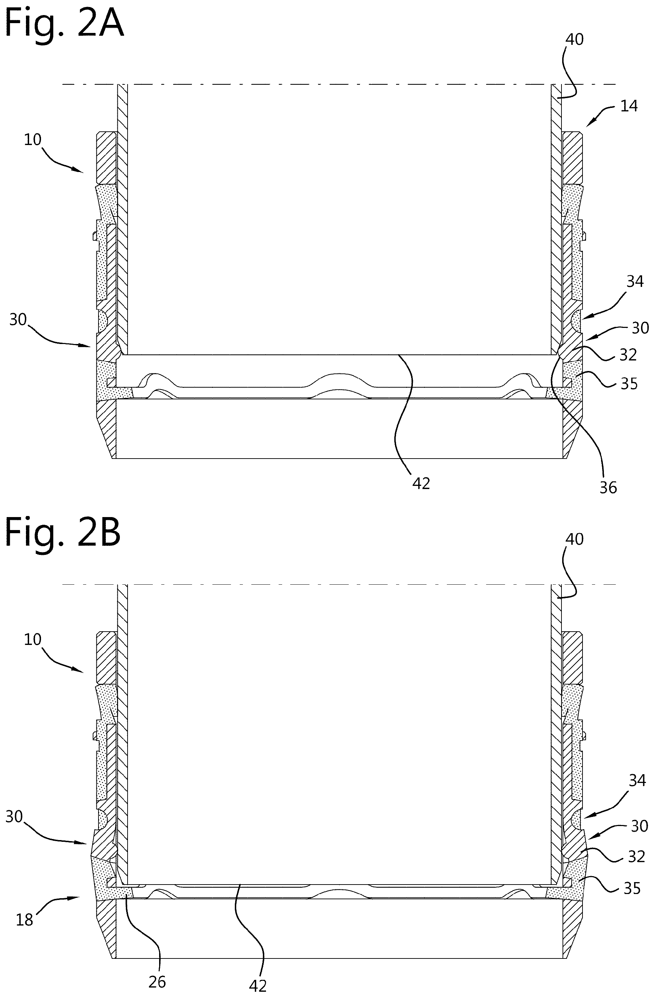

In use, as shown in Fig. 2A, a pipe 40 is inserted into first end 14 of coupler 10. As pipe 40 contacts and slides over protrusions 36 of insertion indicators 30, insertion indicators 30 are flexed outward around hinge portion 34. Flexible material 35 surrounding rigid parts 32 allows for the flexing while maintaining the seal of coupler 10, ensuring there is no leakage from the outward flexing of rigid parts 32. The shape of protrusion(s) 36 (rounded in this case) allows for easy sliding of pipe 40 over insertion indicator(s) 30, thereby helping to ensure little to no extra insertion force is needed for pipe 40 to flex insertion indicator(s) 30 outward. Fig. 2B shows pipe 40 fully inserted, with end 42 of pipe 40 connecting to layer 26 of stop edge 18, and insertion indicators 30 flexed outward clearly showing visually and tactilely that pipe 40 is fully inserted into coupler 10. Placing insertion indicators 30 near stop edge 18 helps to easily show that pipe 40 is properly inserted into coupler 10.

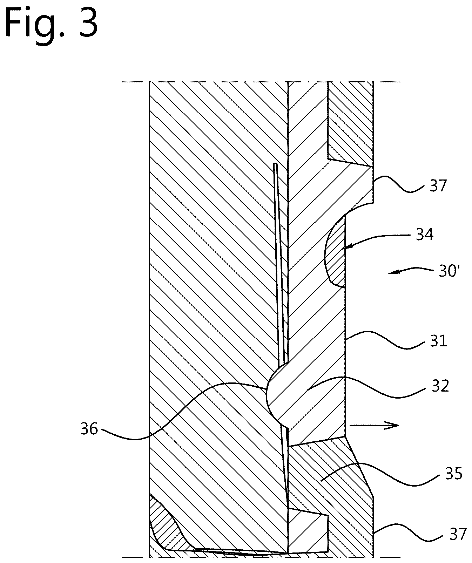

FIG. 3 shows a close up cross-sectional view of a further embodiment of an insertion indicator 30'. Insertion indicator 30' is configured much the same as insertion indicator 30, and thus only differences will be discussed. In FIG. 3, an outer surface 31 of rigid part 32 of insertion indicator 30' is radially offset inward from the general outer surface 37 of coupler 10. Thus, when insertion indicator 30' is flexed outward upon insertion of a pipe (not shown), the flexing outward will be to substantially the same outer circumference or diameter as the general outer surface 37 of coupler 10. This configuration can help to reduce any chances of damage to insertion indicator 30' when flexing outward upon insertion of a pipe. While the insertion indicator 30' is shown as offset generally parallel to the outer surface, the insertion indicator 30, 30' could be at an angle in other embodiments. For example, the insertion indicator could start near the outer surface and be angled toward the position of surface 31 near a lower side.

Such configurations of pipe and coupler provide a strong and fluid tight connection while allowing for simple visual and/or tactile confirmation that pipe 40 is inserted correctly into coupler 10. The ability to easily see and/or feel whether pipe 40 is properly inserted into coupler 10 can result in a much faster and more reliable installation, while still ensuring that coupler 10 remains leak-free.

While the term "pipe" is used generally, this can indicate a pipe, a fitting, a pipe and fitting together and/or a spigot end of a pipe. While two insertion indicators 30 are shown in Figs. 1A-2B, this is for example purposes only and a coupler could have only one insertion indicator, or more than two insertion indicators.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. Coupler (10) comprising:
- a first end (14) for receiving a pipe section and a second end (16); and
- an insertion indicator (30) located between the first end (14) and the second end (16), the insertion indicator (30) comprising a rigid part (32) at least partially surrounded by flexible material (35), wherein the rigid part (32) flexes outward upon insertion of a pipe into the coupler (10).

2. The coupler (10) according to claim 1, wherein the rigid part (32) comprises a hinge portion (34) which is configured to allow the flexing outward upon insertion of a pipe.

3. The coupler (10) according to claim 2, wherein the hinge portion (34) comprises a portion of the rigid part (32) in which a width of the rigid material in the radial direction is less than a width of the rigid material in the radial direction in the rigid part not forming the hinge portion (34).

4. The coupler (10) according to any of the preceding claims, wherein the rigid part (32) comprises a protrusion (36) extending into an interior of the coupler (10) and which is pushed outward upon insertion of a pipe, thereby flexing the rigid part (32) outward.

5. The coupler (10) according to claim 4, wherein the protrusion (36) is at least part rounded or partially spherical.

6. The coupler (10) according to any preceding claim, wherein the rigid part (32) is surrounded on one or more sides by flexible material (35).

7. The coupler (10) according to any preceding claim, wherein when no pipe is inserted into the coupler (10), the insertion indicator (30) substantially aligns with an outer circumference of the coupler (10), or the insertion indicator (30) is at least partially offset radially inward from an outer circumference of the coupler (10).

8. The coupler (10) according to any preceding claim, wherein the coupler (10) comprises a plurality of insertion indicators (30) located between the first end (14) and the second end (16), each insertion indicator (30) comprising a rigid part (32) at least partially surrounded by a flexible part (35), wherein each rigid part (32) flexes outward upon insertion of a pipe into the coupler (10), preferably wherein the insertion indicators (30) are spaced around the circumference of the coupler (10).

9. The coupler (10) according to any of the preceding claims, wherein the rigid part (32) is a plastic or metal.

10. The coupler (10) according to any of the preceding claims, wherein the flexible material (35) is thermoplastic elastomer and/or rubber or any other flexible material

11. The coupler (10) according to any of the preceding claims, and further comprising a stop edge (18) located at an inner circumference of the coupler (10) between the insertion indicator (30) and the second end (16), preferably wherein the stop edge (18) comprises a rigid portion (24) and a flexible portion (26) comprising a plurality of flexible protrusions and/or a wave for receiving an end of a pipe section.

12. The coupler (10) according to any of the preceding claims, wherein a force to flex the rigid part (32) outward is configured such that it does not increase the insertion force needed to insert a pipe into the coupler (10).

13. The coupler (10) according to any of the preceding claims, and further comprising a pipe (40) with a first end extending inside the coupler (10) such that the insertion indicator (30) is flexed outward.

14. A method of forming a coupler (10) with an insertion indicator (30), the method comprising:
injection moulding a rigid part with a first end (14) for receiving a pipe section, a second end (16) and a rigid part (32) of an insertion indicator (30); and
moulding flexible material to at least partially surround the rigid part (32) of the insertion indicator (30), wherein the rigid part (32) is configured such that the rigid part (32) flexes outward upon insertion of a pipe into the coupler (10).

15. The method of claim 14, wherein the step of injection moulding the rigid part (32) of an insertion indicator (30) comprises forming the insertion indicator (30) to have a hinge portion (34) and a protrusion (36) extending into an interior of the coupler (10).
